# EUROPEAN PATENT APPLICATION

(11) **EP 4 804 135 A1**
(43) Date of publication of application: **09.09.2026**
(21) Application number: 24885633.8
(22) Date of filing: 25.10.2024
(51) Int. Cl.: G06T 19/00, G06F 3/01, G06F 3/04815

(54) **INFORMATION PROCESSING DEVICE, DISPLAY SYSTEM, DISPLAY METHOD, AND DISPLAY PROGRAM**

(30) Priority: 30.10.2023 JP 2023185779
(71) Applicant: Resonac Corporation, Tokyo 105-7325 (JP)
(72) Inventor: NAKAUCHI, Masataka, Tokyo 105-7325 (JP); YOSHIDA, Katsuhisa, Tokyo 105-7325 (JP); SAITO, Tatsushi, Tokyo 105-7325 (JP); MINAMI, Takuya, Tokyo 105-7325 (JP); SHIMIZU, Yohei, Tokyo 105-7325 (JP); MITSUMOTO, Ryuichi, Tokyo 105-7325 (JP)
(74) Representative: Strehl & Partner mbB
(86) International application number: PCT/JP2024/038249
(87) International publication number: WO 2025/094860

(57) **Abstract**

Smooth communication is enabled between a plurality of users while the users are viewing the same three-dimensional model within a virtual space. An information processing device includes: an authority setting unit configured to set operation authority for operating a three-dimensional model within a virtual space to one of users; an authorized-user image generation unit configured to, in a case where the operation authority is set to a first user, generate an authorized-user display screen including an authorized-user image in which the three-dimensional model within the virtual space based on a viewpoint of the first user is operated based on an operation instruction from the first user; a non-authorized-user image generation unit configured to generate a non-authorized-user display screen including the authorized-user image and a non-authorized-user image showing the virtual space based on a viewpoint of a second user to whom the operation authority is not set; and a control unit configured to control to display the authorized-user display screen on a first HMD worn by the first user and the non-authorized-user display screen on a second HMD worn by the second user.

## Description

### TECHNICAL FIELD

The present disclosure relates to an information processing device, a display system, a display method, and a display program.

### BACKGROUND ART

A display system is known in which a plurality of users wear head-mounted displays (HMDs) to communicate with each other while viewing the same three-dimensional model within a virtual space in virtual reality or augmented reality. According to the display system, even when the users are located remotely from each other and cannot share a physical object, the users can communicate with each other while sharing the same three-dimensional model.

### CITATION LIST

### PATENT LITERATURE

Patent Document 1: Japanese Patent Application Laid-Open Publication No. 2014-206990
Patent Document 2: Japanese Patent Application Laid-Open Publication No. 2022-087917

### SUMMARY OF THE INVENTION

### PROBLEM TO BE SOLVED BY THE INVENTION

However, in the display system, the plurality of users wearing the HMDs view the same three-dimensional model from their own viewpoints. Therefore, it becomes difficult for the plurality of users to communicate smoothly with each other when they are viewing different positions.

Moreover, in the display system, the plurality of users operate the same three-dimensional model within the virtual space by using their own controllers. Therefore, when the operations conflict with each other, each user is prevented from performing a desired operation, thereby hindering smooth communication.

An object of the present disclosure is to enable smooth communication among a plurality of users while the users are viewing the same three-dimensional model within a virtual space.

### MEANS FOR SOLVING THE PROBLEM

An information processing device according to a first aspect of the present disclosure includes:
an authority setting unit configured to set operation authority for operating a three-dimensional model within a virtual space to one of users;
an authorized-user image generation unit configured to, in a case where the operation authority is set to a first user, generate an authorized-user image in which the three-dimensional model within the virtual space based on a viewpoint of the first user is operated based on an operation instruction from the first user; and generate an authorized-user display screen including the authorized-user image;
a non-authorized-user image generation unit configured to generate a non-authorized-user display screen including the authorized-user image and a non-authorized-user image showing the virtual space based on a viewpoint of a second user to whom the operation authority is not set; and
a control unit configured to control to display the authorized-user display screen on a first HMD worn by the first user and the non-authorized-user display screen on a second HMD worn by the second user.

A second aspect of the present disclosure is the information processing device according to the first aspect, in which
the authorized-user image generation unit is configured to, in a case where the operation authority is set to the second user, generate an authorized-user image in which the three-dimensional model within the virtual space based on the viewpoint of the second user is operated based on an operation instruction from the second user,
the non-authorized-user image generation unit is configured to generate a non-authorized-user image showing the virtual space based on the viewpoint of the first user to whom the operation authority is not set, and
the control unit is configured to control to display the authorized-user display screen on the second HMD worn by the second user and the non-authorized-user display screen on the first HMD worn by the first user.

A third aspect of the present disclosure is the information processing device according to the first or the second aspect, in which
the control unit is configured to, in a case where the operation authority is set to the first user, control to notify the authorized-user image generation unit of viewpoint data received from the first HMD and the operation instruction from the first user, and
the authorized-user image generation unit is configured to generate the authorized-user image by generating an image of the virtual space based on the viewpoint of the first user based on the viewpoint data received from the first HMD and by generating an image in which the three-dimensional model within the virtual space based on the viewpoint of the first user is operated based on the operation instruction from the first user.

A fourth aspect of the present disclosure is the information processing device according to the second aspect, in which
the control unit is configured to, in a case where the operation authority is set to the second user, control to notify the authorized-user image generation unit of viewpoint data received from the second HMD and the operation instruction from the second user, and
the authorized-user image generation unit is configured to generate the authorized-user image by generating an image of a virtual space based on the viewpoint of the second user based on the viewpoint data received from the second HMD and by generating an image in which the three-dimensional model within the virtual space based on the viewpoint of the second user is operated based on the operation instruction from the second user.

A fifth aspect of the present disclosure is the information processing device according to the third aspect, in which
the control unit is configured to, in a case where the operation authority is set to the first user, control to notify the authorized-user image generation unit of a position-specifying instruction from the second user, and
the authorized-user image generation unit is configured to generate the authorized-user image including a pointer that points to a position within the virtual space based on the viewpoint of the first user based on the position-specifying instruction from the second user.

A sixth aspect of the present disclosure is the information processing device according to the fourth aspect, in which
the control unit is configured to, in a case where the operation authority is set to the second user, control to notify the authorized-user image generation unit of a position-specifying instruction from the first user, and
the authorized-user image generation unit is configured to generate the authorized-user image including a pointer that points to a position within the virtual space based on the viewpoint of the second user based on the position-specifying instruction from the first used.

A seventh aspect of the present disclosure is the information processing device according to any one of the first to sixth aspects, further including:
a transmission/reception unit configured to transmit a voice of the first user to the second HMD and transmit a voice of the second user to the first HMD.

An eighth aspect of the present disclosure is the information processing device according to any one of the first to seventh aspects, in which
the non-authorized-user image generation unit is configured to, in a case where the second user to whom the operation authority is not set does not wear the second HMD, generate a non-authorized-user display screen including the authorized-user image, and
the control unit is configured control to display the authorized-user display screen on the first HMD worn by the first user and the non-authorized-user display screen on a display device viewed by the second user.

A ninth aspect of the present disclosure is the information processing device according to the second aspect, in which
the non-authorized-user image generation unit is configured to, in a case where the first user to whom the operation authority is not set does not wear the first HMD, generate a non-authorized-user display screen including the authorized-user image, and
the control unit is configured to control to display the authorized-user display screen on the second HMD worn by the second user and the non-authorized-user display screen a display device viewed by the first user.

A display system according to a tenth aspect of the present disclosure includes:
the information processing device of the first or the second aspect; and
the first HMD and the second HMD of the first or the second aspect.

A display system according to an eleventh aspect of the present disclosure includes:
the information processing device of the eighth aspect; and
the first HMD and the display device of the eighth aspect.

A display system according to a twelfth aspect of the present disclosure includes:
the information processing device of the ninth aspect; and
the second HMD and the display device of the ninth aspect.

A display method according to a thirteenth aspect of the present disclosure is executed by a computer, the display method includes the steps of:
setting operation authority for operating a three-dimensional model within a virtual space to one of users;
generating, in a case where the operation authority is set to a first user, an authorized-user display screen including an authorized-user image in which the three-dimensional model within the virtual space based on a viewpoint of the first user is operated based on an operation instruction from the first user;
generating a non-authorized-user display screen including the authorized-user image and a non-authorized-user image showing the virtual space based on a viewpoint of a second user to whom the operation authority is not set; and
controlling to display the authorized-user display screen on a first HMD worn by the first user and the non-authorized-user display screen on a second HMD worn by the second user.

A display program according to a fourteenth aspect of the present disclosure causes a computer to execute the steps of:
setting operation authority for operating a three-dimensional model within a virtual space to one of users;
generating, in a case where the operation authority is set to a first user, an authorized-user display screen including an authorized-user image in which the three-dimensional model within the virtual space based on a viewpoint of the first user is operated based on an operation instruction from the first user;
generating a non-authorized-user display screen including the authorized-user image and a non-authorized-user image showing the virtual space based on a viewpoint of a second user to whom the operation authority is not set; and
controlling to display the authorized-user display screen on a first HMD worn by the first user and the non-authorized-user display screen on a second HMD worn by the second user.

### ADVANTAGEOUS EFFECTS OF THE INVENTIO

According to the present disclosure, it is possible to enable smooth communication among the plurality of users while the users are viewing the same three-dimensional model within a virtual space.

### BRIEF DESCRIPTION OF THE DRAWINGS

[FIG. 1] FIG. 1 is a view illustrating an example of a system configuration of a display system according to a first embodiment.
[FIG. 2] FIG. 2 is a first view illustrating an example of a communication scene in which a display system of a comparative example is used.
[FIG. 3] FIG. 3 is a second view illustrating an example of a communication scene in which the display system of the comparative example is used.
[FIG. 4A] FIG. 4A is a first diagram illustrating an example of a hardware configuration of an information processing device.
[FIG. 4B] FIG. 4B is a diagram illustrating examples of hardware configurations of a first HMD and a second HMD.
[FIG. 5] FIG. 5 is a first diagram illustrating an example of a functional configuration of the information processing device.
[FIG. 6] FIG. 6 is a diagram illustrating a specific example of processing performed by an authorized-user image generation unit.
[FIG. 7] FIG. 7 is a diagram illustrating a specific example of processing performed by a non-authorized-user image generation unit.
[FIG. 8A] FIG. 8A is a first diagram illustrating a specific example of processing performed by a control unit.
[FIG. 8B] FIG. 8B is a second diagram illustrating a specific example of processing performed by a control unit.
[FIG. 9] FIG. 9 is a first flowchart illustrating a flow of virtual space display processing performed by the information processing device.
[FIG. 10] FIG. 10 is a flowchart illustrating a flow of audio transmission/reception processing performed by the information processing device.
[FIG. 11] FIG. 11 is a first view illustrating an example of a communication scene in which the display system according to the first embodiment is used.
[FIG. 12] FIG. 12 is a second view illustrating an example of a communication scene in which the display system according to the first embodiment is used.
[FIG. 13] FIG. 13 is a view illustrating a system configuration example of a display system according to a second embodiment.
[FIG. 14A] FIG. 14A is a second diagram illustrating an example of a hardware configuration of an information processing device.
[FIG. 14B] FIG. 14B is a diagram illustrating an example of a hardware configuration of an information terminal.
[FIG. 15] FIG. 15 is a second diagram illustrating an example of a functional configuration of the information processing device.
[FIG. 16] FIG. 16 is a third diagram illustrating a specific example of processing performed by a control unit.
[FIG. 17] FIG. 17 is a second flowchart illustrating a flow of virtual-space display processing performed by the information processing device.
[FIG. 18] FIG. 18 is a first view illustrating an example of a communication scene in which the display system according to the second embodiment is used.
[FIG. 19] FIG. 19 is a second view illustrating an example of a communication scene in which the display system according to the second embodiment is used.

### DESCRIPTION OF THE EMBODIMENTS

Hereinafter, embodiments will be described with reference to the accompanying drawings. In this specification and the drawings, components having substantially the same functional configuration are denoted by the same reference signs, and redundant description thereof will be omitted.

### [First Embodiment]

### <System Configuration of Display System>

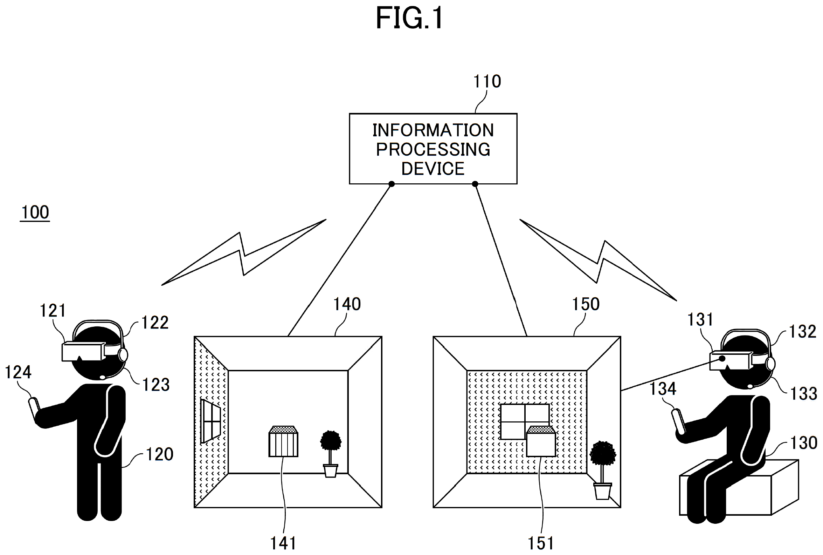

First, a system configuration of a display system according to a first embodiment will be described. FIG. 1 is a view illustrating an example of the system configuration of the display system according to the first embodiment. As illustrated in FIG. 1, a display system 100 includes:
- an information processing device 110;
- a first head-mounted display (HMD) 121, an audio output device 122, an audio input device 123, and a controller 124; and
- a second head-mounted display (HMD) 131, an audio output device 132, an audio input device 133, and a controller 134.

In the display system 100, the information processing device 110 and the first HMD 121 are communicably connected. Moreover, in the display system 100, the information processing device 110 and the second HMD 131 are communicably connected. According to the display system 100, a first user 120 and a second user 130 can communicate with each other while viewing the same three-dimensional model within a virtual space.

The information processing device 110 communicates with the first HMD 121 and then generates an image of a virtual space (e.g., a virtual-space image 140) based on a viewpoint of the first user 120 wearing the first HMD 121. The information processing device 110 communicates with the first HMD 121 and then receives an operation instruction for a three-dimensional model 141 included in the virtual-space image 140.

Similarly, the information processing device 110 communicates with the second HMD 131 and then generates an image of a virtual space (e.g., a virtual-space image 150) based on a viewpoint of the second user 130 wearing the

### second HMD 131. The information processing device 110 communicates with the second HMD 131 and then receives an operation instruction for a three-dimensional model 151 included in the virtual-space image 150.

The information processing device 110 communicates with the first HMD 121 and then receives a position-specifying instruction for specifying a position within the virtual-space image (the virtual-space image 140 or 150).

Similarly, the information processing device 110 communicates with the second HMD 131 and then receives a position-specifying instruction for specifying a position within the virtual-space image (the virtual-space image 140 or 150).

Note that the operation authority for operating the three-dimensional model within the virtual space is assigned to either the first user 120 or the second user 130. It is set in the information processing device 110 that the operation authority is assigned to either the first user 120 or the second user 130. The information processing device 110 switches processing according to whether the operation authority is set to the first user 120 or to the second user 130.

In a case where the operation authority is set to the first user 120, the information processing device 110 generates an authorized-user image, by:
causing the three-dimensional model 141 in the generated virtual-space image 140 to operate in accordance with an operation instruction from the first user 120; and
generating a virtual-space image in which a pointer (not illustrated in FIG. 1) is moved to a position in accordance with a position-specifying instruction from the first user 120 or the second user 130.

The virtual-space image thus generated is designated as the authorized-user image.

On the other hand, in a case where the operation authority is not set to the first user 120, the information processing device 110 designates
-the generated virtual-space image 140
as a non-authorized-user image.

In a case where the operation authority is set to the second user 130, the information processing device 110 generates an authorized-user image, by:
causing the three-dimensional model 151 in the generated virtual-space image 150 to operate in accordance with an operation instruction from the second user 130; and
generating a virtual-space image in which a pointer (not illustrated in FIG. 1) is moved to a position in accordance with a position-specifying instruction from the first user 120 or the second user 130.

The virtual-space image thus generated is designated as the authorized-user image. On the other hand, in a case where the operation authority is not set to the second user 130, the information processing device 110 designates - the generated virtual-space image 150
as a non-authorized-user image.

Moreover, in a case where the operation authority is set to the first user 120, the information processing device 110 transmits, to the first HMD 121, an authorized-user display screen including the authorized-user image generated based on the virtual-space image 140. In a case where the operation authority is not set to the first user, the information processing device 110 transmits, to the first HMD 121, a non-authorized-user display screen including the non-authorized-user image generated based on the virtual-space image 140 and the authorized-user image generated based the virtual-space image 150.

In a case where the operation authority is set to the second user 130, the information processing device 110 transmits, to the second HMD 131, an authorized-user display screen including the authorized-user image generated based on the virtual-space image 150. In a case where the operation authority is not set to the second user, the information processing device 110 transmits, to the second HMD 131, a non-authorized-user display screen including the non-authorized-user image generated based on the virtual-space image 150 and the authorized-user image generated based on the virtual-space image 140.

Furthermore, the information processing device 110 communicates with the first HMD 121 and the second HMD 131 and then transmits and receives audio data so that a voice of the first user 120, which is acquired by the audio input device 123, is output from the audio output device 132. The information processing device 110 communicates with the first HMD 121 and the second HMD 131 and then transmits and receives audio data so that a voice of the second user 130, which is acquired by the audio input device 133, is output from the audio output device 122.

The first HMD 121 is an HMD worn by the first user 120. The first HMD 121 includes various sensors, such as an acceleration sensor, a gyro sensor, and a geomagnetic sensor, and acquires viewpoint data of the first user 120 by measuring a position, an orientation, a rotation direction, and the like of the head of the first user 120. The first HMD 121 transmits the acquired viewpoint data to the information processing device 110.

The first HMD 121 communicates with the audio input device 123 and the audio output device 122. The first HMD 121 acquires audio data from the audio input device 123 and transmits the audio data to the information processing device 110. The first HMD 121 also receives audio data from the information processing device 110 and notifies the audio output device 122.

The first HMD 121 communicates with the controller 124. The first HMD 121 acquires an operation instruction or a position-specifying instruction from the controller 124 and transmits the instruction to the information processing device 110.

The first HMD 121 includes a display device. The first HMD 121 displays, on the display device, the authorized-user display screen or the non-authorized-user display screen transmitted from the information processing device 110.

The audio output device 122 outputs the audio data notified from the first HMD 121. The audio input device 123 acquires a voice of the first user 120 and notifies the first HMD 121. The controller 124 includes various sensors such as an acceleration sensor, a gyro sensor, and a geomagnetic sensor, and acquires an operation instruction or a position-specifying instruction from the first user 120 by measuring various sensor data, including a position, an orientation, and a moving direction of a hand of the first user 120. The controller 124 notifies the first HMD 121 of the acquired operation instruction or position-specifying instruction.

Note that, in a case where the operation authority is set to the first user 120, the controller 124 notifies the first HMD 121 of any one of the operation instruction or the position-specifying instruction in response to operation of a changeover switch (not illustrated). Moreover, in a case where the operation authority is not set to the first user 120, the controller 124 notifies the first HMD 121 of the position-specifying instruction regardless of whether or not the changeover switch (not illustrated) is operated.

The second HMD 131 is an HMD worn by the second user 130. The second HMD 131 includes various sensors, such as an acceleration sensor, a gyro sensor, and a geomagnetic sensor, and acquires viewpoint data of the second user 130 by measuring a position, an orientation, a rotation direction, and the like of the head of the second user 130. The second HMD 131 transmits the acquired viewpoint data to the information processing device 110.

The second HMD 131 communicates with the audio input device 133 and the audio output device 132. The second HMD 131 acquires audio data from the audio input device 133 and transmits the audio data to the information processing device 110. The second HMD 131 also receives audio data from the information processing device 110 and notifies the audio output device 132.

The second HMD 131 communicates with the controller 134. The second HMD 131 acquires an operation instruction or a position-specifying instruction from the controller 134 and transmits the instruction to the information processing device 110.

The second HMD 131 includes a display device. The second HMD 131 displays, on the display device, the authorized-user display screen or the non-authorized-user display screen transmitted from the information processing device 110.

The audio output device 132 outputs the audio data notified from the second HMD 121. The audio input device 133 acquires a voice of the second user 130 and notifies the second HMD 131. The controller 134 includes various sensors such as an acceleration sensor, a gyro sensor, and a geomagnetic sensor, and acquires an operation instruction or a position-specifying instruction from the second user 130 by measuring various sensor data, including a position, an orientation, a moving direction, and the like of a hand of the second user 130. The controller 134 notifies the second HMD 131 of the acquired operation instruction or position-specifying instruction.

Note that, in a case where the operation authority is set to the second user 130, the controller 134 notifies the second HMD 131 of any one of the operation instruction or the position-specifying instruction in response to operation of a changeover switch (not illustrated). Moreover, in a case where the operation authority is not set to the second user 130, the controller 134 notifies the second HMD 131 of the position-specifying instruction regardless of whether or not the changeover switch (not illustrated) is operated.

In the above description, it is assumed that the first user 120 and the second user 130 are positioned such that they cannot directly talk to each other, and that transmission and reception of audio data are performed via the information processing device 110. However, for example, in a case where the first user 120 and the second user 130 are in the same room or otherwise able to directly talk to each other, the audio output device 122, the audio input device 123, the audio output device 132, and the audio input device 133 are not essential components.

### <Communication Scene in Which Display System of Comparative Example Is Used>

Next, a disadvantage will be described in a case where a first user 120 and a second user 130 communicate with each other while viewing the same three-dimensional model in a virtual space by using a display system of a comparative example.

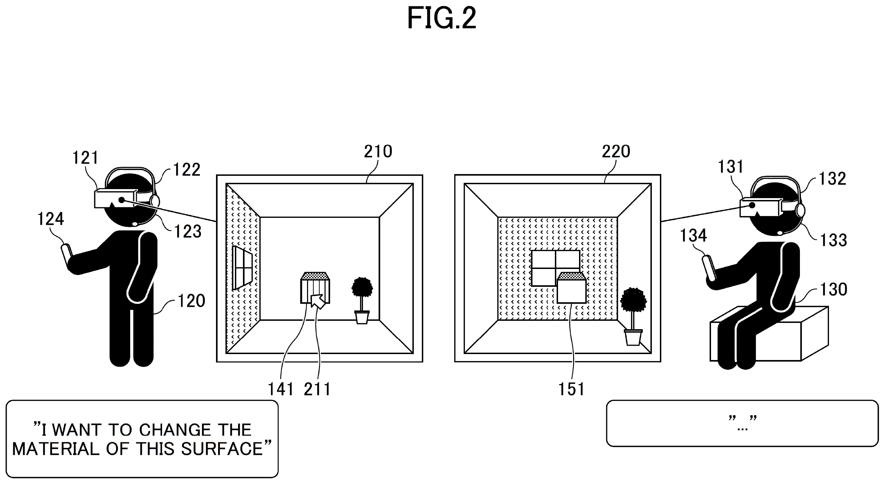

FIG. 2 is a first view illustrating an example of a communication scene in which the display system of the comparative example is used.

In FIG. 2, a virtual-space image 210 is an example of a virtual-space image displayed on a display device included in a first HMD 121 in the display system of the comparative example. In a case of the display system of the comparative example, a virtual-space image 210, which is a virtual-space image based on the viewpoint of the first user 120 and in which a pointer 211 is moved to a position in accordance with a position-specifying instruction transmitted from the first HMD 121, is displayed on the display device included in the first HMD 121.

Moreover, in FIG. 2, a virtual-space image 220 is an example of a virtual-space image displayed on a display device included in a second HMD 131 in the display system of the comparative example. As illustrated in FIG. 2, in a case of the display system of the comparative example, the virtual-space image 220 based on the viewpoint of the second user 130 is displayed on the display device included in the second HMD 131.

Under such a displaying state, suppose that the first user 120 says, for example, "I want to change the material of this surface" for a specific surface of a three-dimensional model 141 pointed to by the pointer 211. In this case, the second user 130 is unable to identify which surface of a three-dimensional model 151 of which the first user 120 wishes to change the material, and thus cannot smoothly communicate with the first user 120.

This is because the virtual-space image 220 viewed by the second user 130 is a virtual-space image based on the viewpoint of the second user 130, and therefore, the second user 130 cannot view the three-dimensional model 141 whose specific surface is pointed to by the first user 120. In addition, the pointer 211 operated by the first user 120 is not displayed in the virtual-space image 220 viewed by the second user 130. Therefore, the second user 130 cannot identify which surface of the three-dimensional model 151 corresponds to the surface pointed to by the first user 120.

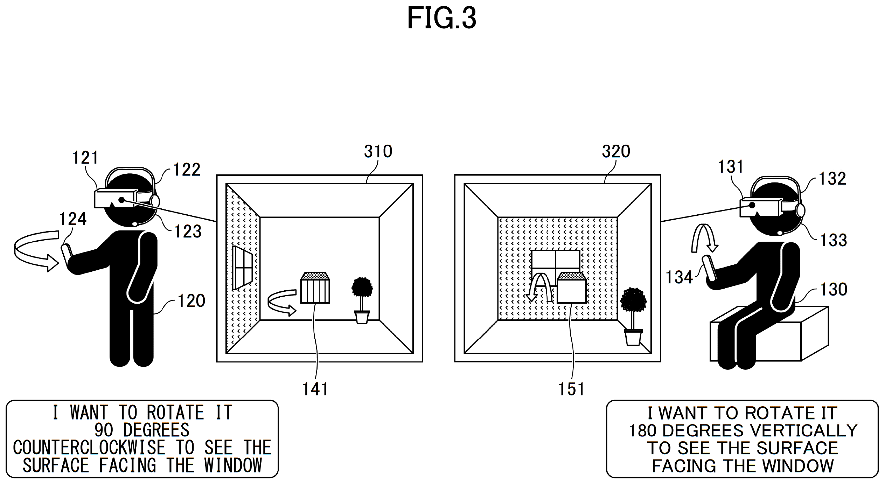

FIG. 3 is a second view illustrating an example of a communication scene in which the display system of the comparative example is used.

In FIG. 3, a virtual-space image 310 is an example of a virtual-space image displayed on the display device included in the first HMD 121 in the display system of the comparative example. As illustrated in FIG. 3, in a case of the display system of the comparative example, the virtual-space image 310 based on the viewpoint of the first user 120 is displayed on the display device included in the first HMD 121. Thus, for example, in a case where the first user 120 attempts to view the surface of the three-dimensional model 141 facing the window in the virtual space, the first user 120 moves the controller 124 so as to draw a counterclockwise arc, thereby rotating the three-dimensional model 141 counterclockwise by 90 degrees.

However, in FIG. 3, a virtual-space image 320 is an example of a virtual-space image displayed on the display device included in the second HMD 131 in the display system of the comparative example. As illustrated in FIG. 3, in a case of the display system of the comparative example, the virtual-space image 320 based on the viewpoint of the second user 130 is displayed on the display device included in the second HMD 131. Thus, for example, in a case where the second user 130 attempts to view the surface on the window side of the three-dimensional model 151 in the virtual space, the second user 130 moves the controller 134 so as to draw an arc from back to front, thereby rotating the three-dimensional model 151 vertically by 180 degrees.

In such a situation where the operations performed by the first user 120 and the second user 130 conflict with each other, neither the first user 120 nor the second user 130 can move the three-dimensional model 141 or the three-dimensional model 151 in a desired direction. Therefore, neither the first user 120 nor the second user 130 can view the surface they are attempting to view, and thus cannot smoothly communicate with each other. This is because, when a plurality of users simultaneously issue different operation instructions to the same three-dimensional model, the three-dimensional model moves in a direction corresponding to a combination of all the operation instructions.

In such a case where the first user 120 and the second user 130 communicate with each other while viewing the same three-dimensional model in the virtual space by using the display system of the comparative example, a disadvantage arises in that the first user 120 and the second user 130 cannot communicate smoothly with each other in
- a scene where either of the users issues a position-specifying instruction, or
- a scene where a plurality of users simultaneously issue operation instructions.

An object of the display system 100 according to the first embodiment is to overcome such a disadvantage and enable smooth communication among a plurality of users while the users are viewing the same three-dimensional model within a virtual space. Hereinafter, the display system 100 according to the first embodiment will be described in detail.

### <Hardware Configuration of Information Processing Device>

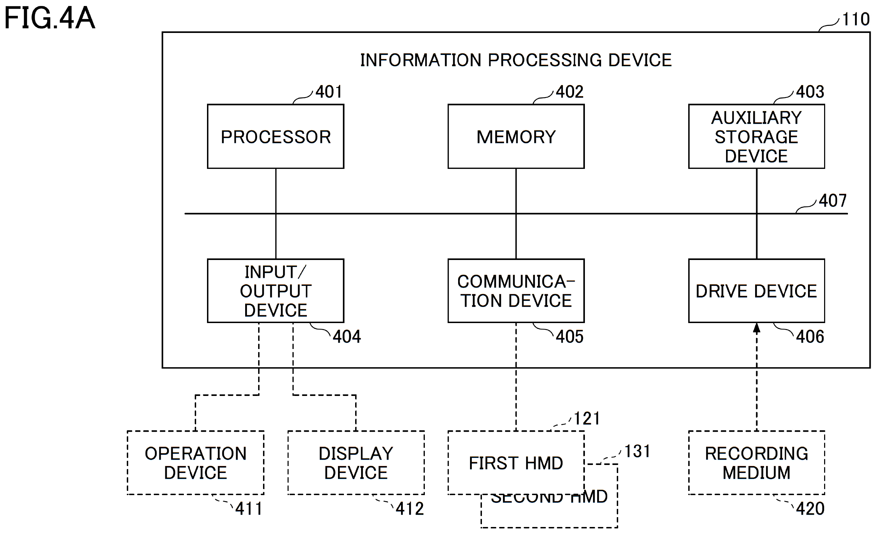

First, a hardware configuration of the information processing device 110 will be described. FIG. 4A is a first diagram illustrating an example of the hardware configuration of the information processing device. As illustrated in FIG. 4A, the information processing device 110 includes a processor 401, a memory 402, an auxiliary storage device 403, an input/output device 404, a communication device 405, and a drive device 406. The hardware components of the information processing device 110 are connected to each other via a bus 407.

The processor 401 includes various computing devices such as a central processing unit (CPU) and a graphics processing unit (GPU). The processor 401 loads various programs into the memory 402, reads the programs, and executes the programs. Note that the term "various programs" as used herein includes, for example, a program such as a display program described later.

The memory 402 includes main storage devices such as a read-only memory (ROM) and a random access memory (RAM). The processor 401 and the memory 402 form what is generally referred to as a computer. The computer implements each functional unit by the processor 401 executing various programs read from the memory 402.

The auxiliary storage device 403 stores various programs and various data used by the processor 401 to execute the programs.

The input/output device 404 is a connection device that connects to an operation device 411 and a display device 412, which are examples of user interface devices. The communication device 405 is a communication interface for communicating with the first HMD 121 and the second HMD 131 via a network.

The drive device 406 is a device for loading a recording medium 420. The recording medium 420 as used herein includes a medium such as a CD-ROM, a flexible disk, or a magneto-optical disk, which are capable of optically, electrically, or magnetically recording information. The recording medium 420 may include a medium such as a semiconductor memory capable of electrically recording information, including a ROM and a flash memory.

Note that various programs to be installed in the auxiliary storage device 403 are installed, for example, by loading a distributed recording medium 420 into the drive device 406 and reading the programs recorded on the recording medium 420. Alternatively, various programs to be installed in the auxiliary storage device 403 may be installed by being downloaded from a network via the communication device 405.

### <Hardware Configuration of First HMD and Second HMD>

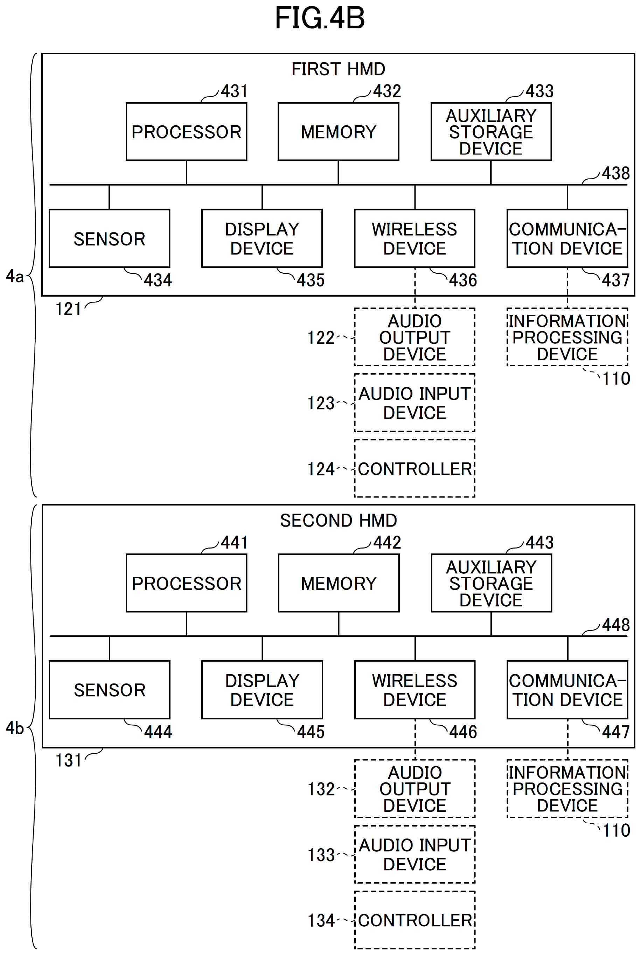

Next, a hardware configuration of the first HMD 121 and the second HMD will be described. FIG. 4B is a diagram illustrating an example of the hardware configuration of the first HMD and the second HMD. As illustrated in (a) of FIG. 4B, the first HMD 121 includes a processor 431, a memory 432, an auxiliary storage device 433, a sensor 434, a display device 435, a wireless device 436, and a communication device 437. The hardware components of the first HMD 121 are connected to each other via a bus 438.

The processor 431 includes various computing devices such as a central processing unit (CPU) and a graphics processing unit (GPU). The processor 431 loads various programs into the memory 432, reads the programs, and executes the programs.

The memory 432 includes main storage devices such as a read-only memory (ROM) and a random access memory (RAM). The processor 431 and the memory 432 form what is generally referred to as a computer. The computer implements each functional unit by the processor 431 executing various programs read from the memory 432.

The auxiliary storage device 433 stores various programs and various data used by the processor 431 to execute the programs.

The sensor 434 includes various sensors, such as an acceleration sensor, a gyro sensor, and a geomagnetic sensor described above, and acquires viewpoint data of the first user 120. The display device 435 displays the authorized-user display screen or a non-authorized-user display screen described above.

The wireless device 436 is a device configured to transmit and receive audio data and to transmit and receive an operation instruction or a position-specifying instruction, between the first HMD 121 and the audio output device 122, the audio input device 123, the controller 124.

The communication device 437 is a device configured to transmit and receive viewpoint data, transmit and receive an authorized-user display screen or a non-authorized-user display screen, transmit and receive audio data, and transmit and receive an operation instruction or a position-specifying instruction, between the information processing device 110 and the first HMD 121.

Note that various programs to be installed in the auxiliary storage device 433 are installed, for example, by being downloaded from a network via the communication device 437.

As illustrated in (b) of FIG. 4B, the second HMD 131 includes a processor 441, a memory 442, an auxiliary storage device 443, a sensor 444, a display device 445, a wireless device 446, and a communication device 447. The hardware components of the second HMD are connected to each other via a bus 448. Note that the hardware components of the second HMD 131 are substantially the same as the hardware components of the first HMD 121, and thus descriptions thereof are omitted herein.

### <Functional Configuration of Information Processing Device>

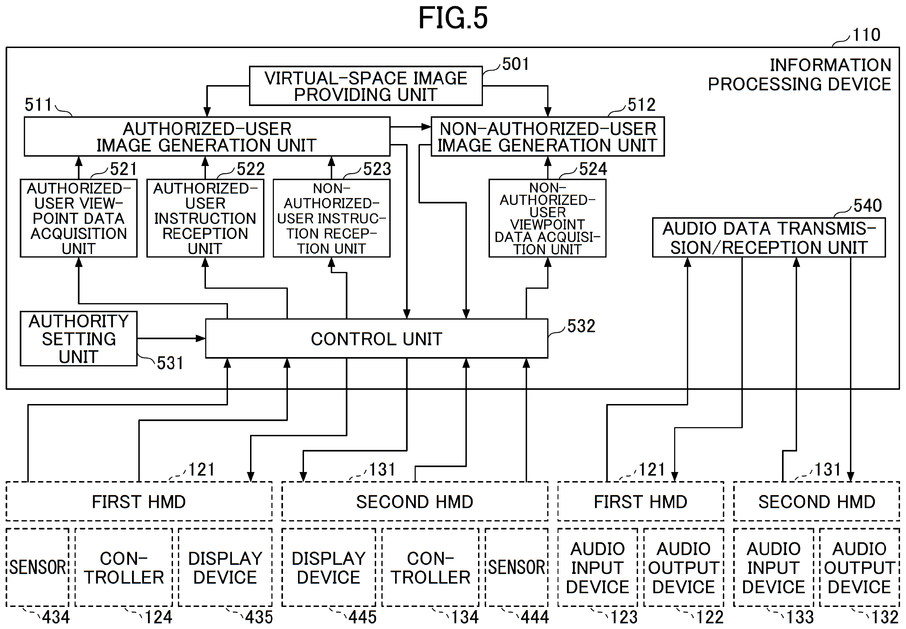

Next, a functional configuration of the information processing device 110 will be described. FIG. 5 is a first diagram illustrating an example of a functional configuration of the information processing device. As described above, a display program is installed in the information processing device 110, and the information processing device 110 implements each functional unit illustrated in FIG. 5 by executing the display program.

As illustrated in FIG. 5, the functional units implemented in the information processing device 110 include a virtual-space image providing unit 501, an authorized-user image generation unit 511, and a non-authorized-user image generation unit 512. The functional units implemented in the information processing device 110 further include an authorized-user viewpoint data acquisition unit 521, an authorized-user instruction reception unit 522, a non-authorized-user instruction reception unit 523, and a non-authorized user viewpoint data acquisition unit 524. The functional units implemented in the information processing device 110 still further include an authority setting unit 531, a control unit 532, and an audio data transmission/reception unit 540.

The virtual-space image providing unit 501 provides a base virtual-space image to the authorized-user image generation unit 511 and the non-authorized-user image generation unit 512. The virtual-space image provided by the virtual-space image providing unit 501 includes a three-dimensional model.

The authorized-user image generation unit 511 acquires, from the authorized-user viewpoint data acquisition unit 521, viewpoint data of the user to whom the operation authority is set. The authorized-user image generation unit 511 generates a virtual-space image based on the acquired viewpoint data from the virtual-space image provided from the virtual-space image providing unit 501.

The authorized-user image generation unit 511 acquires, from the authorized-user instruction reception unit 522, an operation instruction from the user to whom the operation authority is set. The authorized-user image generation unit 511 generates a virtual-space image after the operation of the three-dimensional model by causing the three-dimensional model included in the virtual-space image based on the viewpoint data to operate in accordance with the operation instruction.

The authorized-user image generation unit 511 acquires, from the non-authorized-user instruction reception unit 523, a position-specifying instruction from the user to whom the operation authority is not set. The authorized-user image generation unit 511 generates a virtual-space image in which a pointer is moved, in accordance with a position-specifying instruction, to a position in the virtual-space image after the operation of the three-dimensional model.

The authorized-user image generation unit 511 notifies the non-authorized-user image generation unit 512 of the virtual-space image, in which the pointer is moved, as an authorized-user image. Moreover, the authorized-user image generation unit 511 generates an authorized-user display screen including the virtual-space image in which the pointer is moved, and notifies the control unit 532.

The authorized-user viewpoint data acquisition unit 521 acquires the viewpoint data of the user to whom the operation authority is set, and notifies the authorized-user image generation unit 511.

The authorized-user instruction reception unit 522 acquires the operation instruction from the user to whom the operation authority is set, and notifies the authorized-user image generation unit 511.

The non-authorized-user instruction reception unit 523 acquires the position-specifying instruction from the user to whom the operation authority is not set, and notifies the authorized-user image generation unit 511.

The non-authorized-user image generation unit 512 acquires, from the non-authorized-user viewpoint data acquisition unit 524, viewpoint data of the user to whom the operation authority is not set. The non-authorized-user image generation unit 512 generates a virtual-space image, based on the acquired viewpoint data, from the virtual-space image provided by the virtual-space image providing unit 501, and designates the generated virtual-space image as a non-authorized-user image. Moreover, the non-authorized-user image generation unit 512 acquires the authorized-user image from the authorized-user image generation unit 511. The non-authorized-user image generation unit 512 generates a non-authorized-user display screen including the authorized-user image and the non-authorized-user image and notifies the control unit 532.

The non-authorized-user viewpoint data acquisition unit 524 acquires the viewpoint data of the user to whom the operation authority is not set, and notifies the non-authorized-user image generation unit 512.

The authority setting unit 531 sets the operation authority for operating the three-dimensional model within the virtual space to either the first user 120 or the second user 130. The authority setting unit 531 notifies the control unit 532 of the user to whom the operation authority is set.

The control unit 532 switches destinations for notification or transmission of the viewpoint data, the authorized-user image or the non-authorized-user image, and the operation instruction or the position-specifying instruction transmitted and received between the first HMD 121 and the second HMD 131, in accordance with the set operation authority.

The audio data transmission/reception unit 540 transmits and receives audio data between the first HMD 121 and the second HMD.

### <Details of Processing By Functional Units of Information Processing Device>

Next, details of processing performed by the functional units (herein, the authorized-user image generation unit 511, the non-authorized-user image generation unit 512, and the control unit 532) of the information processing device 110 will be described.

### (1) Details of Processing by Authorized-User Image Generation Unit 511

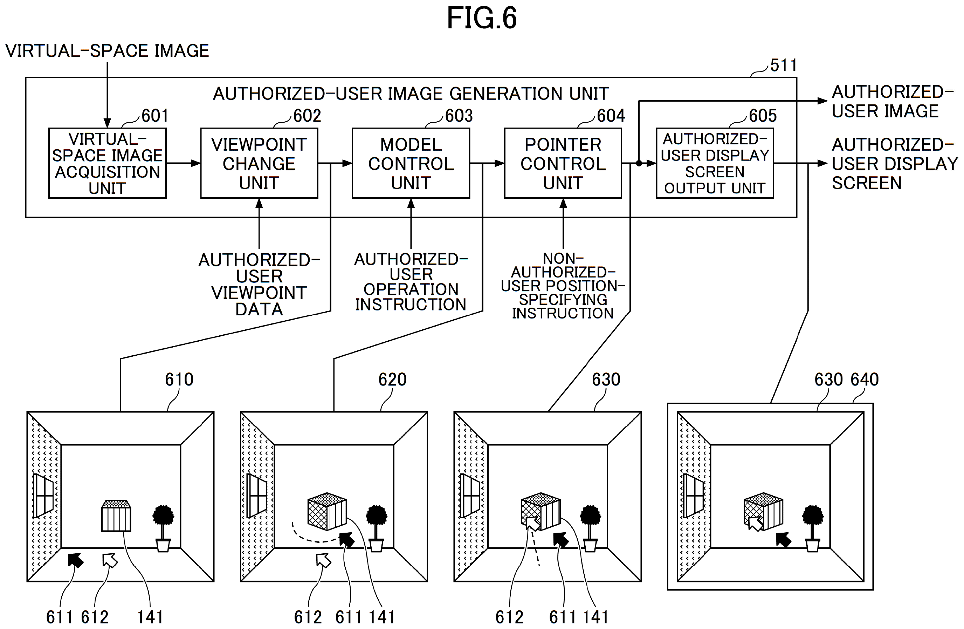

First, details of processing performed by the authorized-user image generation unit 511 will be described. FIG. 6 is a diagram illustrating a specific example of processing performed by the authorized-user image generation unit. As illustrated in FIG. 6, the authorized-user image generation unit 511 further includes a virtual-space image acquisition unit 601, a viewpoint change unit 602, a model control unit 603, a pointer control unit 604, and an authorized-user display screen output unit 605.

The virtual-space image acquisition unit 601 acquires a virtual-space image provided from the virtual-space image providing unit 501, and notifies the viewpoint change unit 602.

The viewpoint change unit 602 acquires, from the authorized-user viewpoint data acquisition unit 521, viewpoint data of the user to whom the operation authority is set. Herein, description is given on the premise that the operation authority is set to the first user 120. The viewpoint change unit 602 generates a virtual-space image 610 based on the viewpoint data of the first user 120. Note that the virtual-space image 610 includes, in addition to the three-dimensional model 141, a pointer 611 that moves in accordance with an operation instruction or a position-specifying instruction of the first user 120, and a pointer 612 that moves in accordance with a position-specifying instruction of the second user 130.

The model control unit 603 acquires the operation instruction of the first user 120 from the authorized-user instruction reception unit 522. The model control unit 603 generates a virtual-space image 620 after the operation of the three-dimensional model 141 by causing the three-dimensional model 141 included in the virtual-space image 610 to operate in accordance with the operation instruction of the first user 120.

The pointer control unit 604 acquires the position-specifying instruction of the second user 130 from the non-authorized-user instruction reception unit 523. The pointer control unit 604 generates a virtual-space image in which the pointer 612 included in the virtual-space image 620 is moved in accordance with the position-specifying instruction of the second user 130, and designates the generated virtual-image as an authorized-user image 630. The pointer control unit 604 notifies the non-authorized-user image generation unit 512 of the authorized-user image 630 and also notifies the authorized-user display screen output unit 605.

The authorized-user display screen output unit 605 generates an authorized-user display screen 640 including the authorized-user image 630 and notifies the control unit 532.

### (2) Details of Processing by Non-Authorized-User Image Generation Unit 512

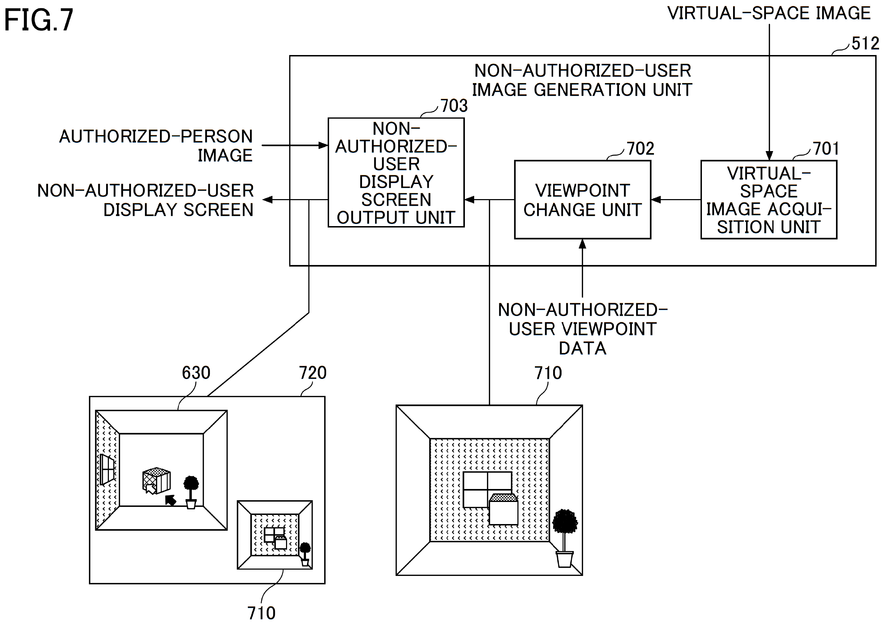

Next, details of processing performed by the non-authorized-user image generation unit 512 will be described. FIG. 7 is a diagram illustrating a specific example of processing performed by the non-authorized-user image generation unit. As illustrated in FIG. 7, the non-authorized-user image generation unit 512 further includes a virtual-space image acquisition unit 701, a viewpoint change unit 702, and a non-authorized-user display screen output unit 703.

The virtual-space image acquisition unit 701 acquires a virtual-space image provided from the virtual-space image providing unit 501, and notifies the viewpoint change unit 702.

The viewpoint change unit 702 acquires, from the non-authorized-user viewpoint data acquisition unit 524, viewpoint data of the second user 130 to whom the operation authority is not set. The viewpoint change unit 702 generates a non-authorized-user image 710 based on the viewpoint data of the second user 130 and notifies the non-authorized-user display screen output unit 703.

The non-authorized-user display screen output unit 703 generates a non-authorized-user display screen 720 by using the authorized-user image 630 notified from the authorized-user image generation unit 511 and the non-authorized-user image 710 notified from the viewpoint change unit 702, and notifies the control unit 532. As illustrated in FIG. 7, the non-authorized-user display screen 720 includes a main region and a subregion. The authorized-user image 630 is displayed in the main region, and the non-authorized-user image 710 is displayed in the subregion.

### (3) Details of Processing Performed by Control Unit 532

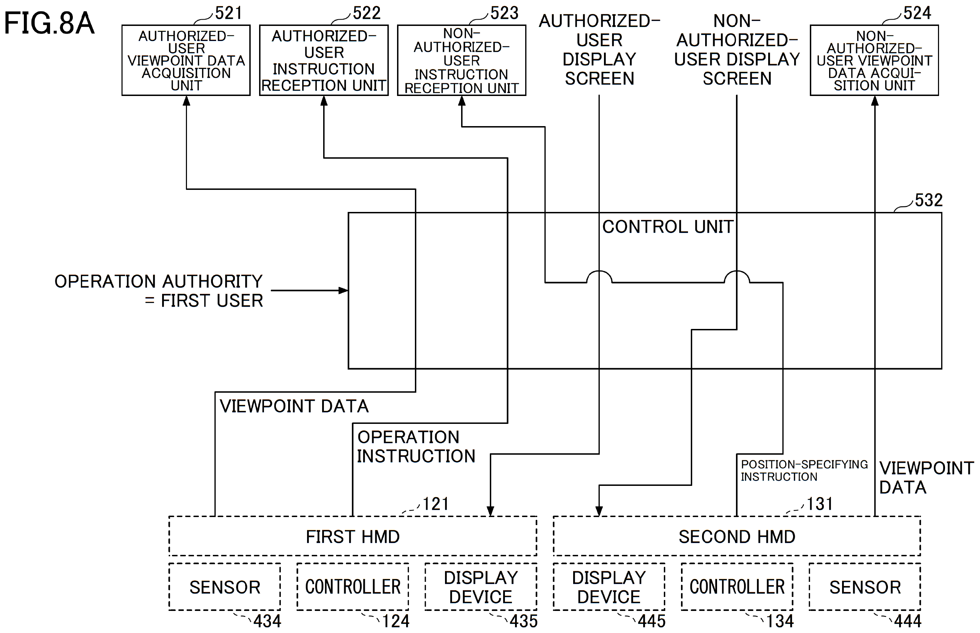

Next, details of processing performed by the control unit 532 will be described. FIG. 8A is a first diagram illustrating a specific example of processing performed by the control unit. As described above, the control unit 532 switches destinations for notification or transmission of the viewpoint data, the authorized-user display screen or the non-authorized-user display screen, and the operation instruction or the position-specifying instruction, in accordance with the set operation authority. FIG. 8A illustrates a state where destinations for notification or transmission are switched in accordance with the operation authority set to the first user 120.

Specifically, in a case where the operation authority is set to the first user 120, the control unit 532:
- notifies the authorized-user viewpoint data acquisition unit 521 of the viewpoint data transmitted from the first HMD 121;
- notifies the authorized-user instruction reception unit 522 of the operation instruction or the position-specifying instruction transmitted from the first HMD 121;
- notifies the non-authorized-user instruction reception unit 523 of the position-specifying instruction transmitted from the second HMD 131; and
- transmits the authorized-user display screen generated by the authorized-user image generation unit 511 to the first HMD 121.

In a case where the operation authority is set to the first user 120, the control unit 532 also:
- notifies the non-authorized-user viewpoint data acquisition unit 524 of the viewpoint data transmitted from the second HMD 131; and
- transmits the non-authorized-user display screen generated by the non-authorized-user image generation unit 512 to the second HMD 131.

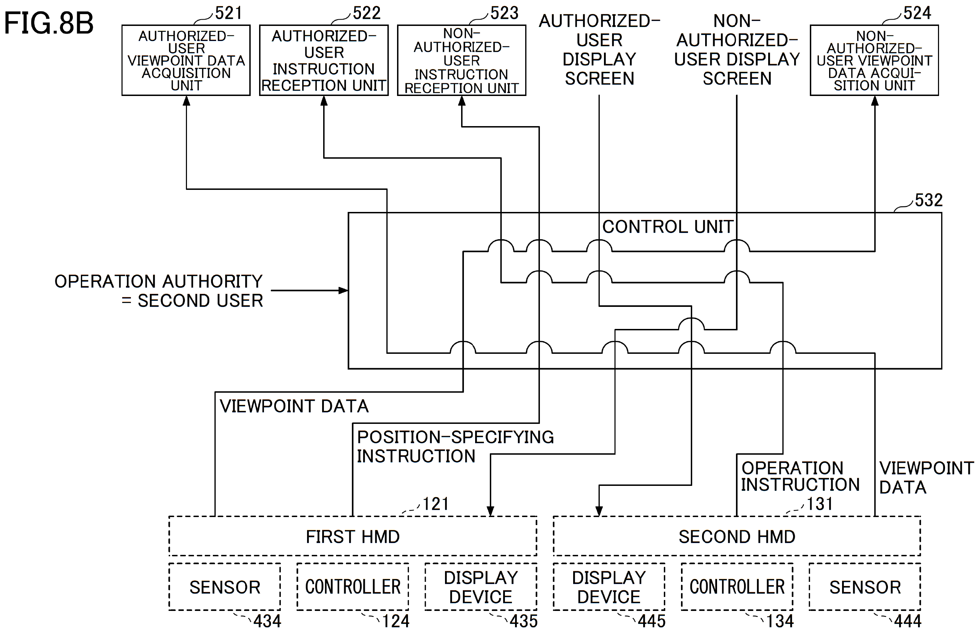

FIG. 8B is a second diagram illustrating a specific example of processing performed by the control unit. As described above, the control unit 532 switches destinations for notification or transmission of the viewpoint data, the authorized-user display screen or the non-authorized-user display screen, and the operation instruction or the position-specifying instruction, in accordance with the set operation authority. FIG. 8B illustrates a state where destinations for notification or transmission are switched in accordance with the operation authority set to the second user 130.

Specifically, in a case where the operation authority is set to the second user 130, the control unit 532:
- notifies the authorized-user viewpoint data acquisition unit 521 of the viewpoint data transmitted from the second HMD 131;
- notifies the authorized-user instruction reception unit 522 of the operation instruction or the position-specifying instruction transmitted from the second HMD 131;
- notifies the non-authorized-user instruction reception unit 523 of the position-specifying instruction transmitted from the first HMD 121; and
- transmits the authorized-user display screen generated by the authorized-user image generation unit 511 to the second HMD 131.

In a case where the operation authority is set to the second user 130, the control unit 532 also:
- notifies the non-authorized-user viewpoint data acquisition unit 524 of the viewpoint data transmitted from the first HMD 121; and
- transmits the non-authorized-user display screen generated by the non-authorized-user image generation unit 512 to the first HMD 121.

### <Flow of Virtual-Space Display Processing by Information Processing Device>

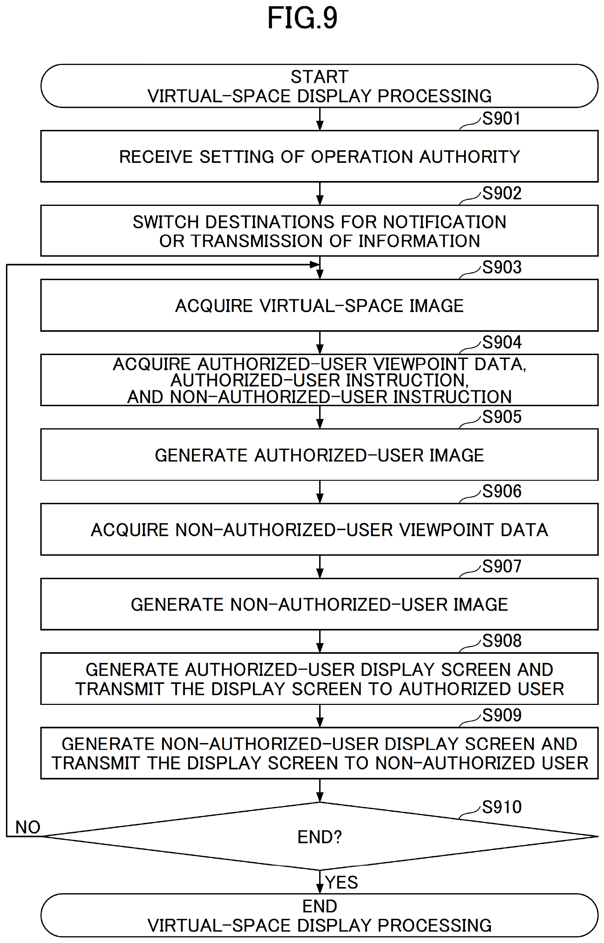

Next, a flow of virtual-space display processing performed by the information processing device 110 will be described. FIG. 9 is a first flowchart illustrating the flow of virtual-space display processing performed by the information processing device.

In Step S901, the information processing device 110 receives the setting of the operation authority.

In Step S902, the information processing device 110 switches destinations for notification or transmission of the viewpoint data, the authorized-user display screen or the non-authorized-user display screen, and the operation instruction or the position-specifying instruction transmitted and received between the first HMD 121 and the second HMD 131, in accordance with the set operation authority.

In Step S903, the information processing device 110 acquires the virtual-space image.

In Step S904, the information processing device 110 acquires the viewpoint data of the user to whom the operation authority is set, the operation instruction of the user to whom the operation authority is set, and the position-specifying instruction of the user to whom the operation authority is not set.

In Step S905, the information processing device 110 generates the authorized-user image based on the viewpoint data, the operation instruction, and the position-specifying instruction acquired in Step S904.

In Step S906, the information processing device 110 acquires the viewpoint data of the user to whom the operation authority is not set.

In Step S907, the information processing device 110 generates the non-authorized-user image based on the viewpoint data acquired in Step S906.

In Step S908, the information processing device 110 generates the authorized-user display screen including the authorized-user image and transmits the authorized-user display screen to the user to whom the operation authority is set.

In Step S909, the information processing device 110 generates the non-authorized-user display screen including the authorized-user image and the non-authorized-user image and transmits the non-authorized-user display screen to the user to whom the operation authority is not set.

In Step S910, the information processing device 110 determines whether or not to end the virtual-space display processing. In Step S910, in a case where it is determined that the virtual-space display processing is to be continued (NO in Step S910), the processing returns to Step S903. On the other hand, in Step S910, in a case where it is determined that the virtual-space display processing is to be ended (YES in Step S910), the virtual-space display processing is ended.

### <Flow of Audio Transmission/Reception Processing by Information Processing Device>

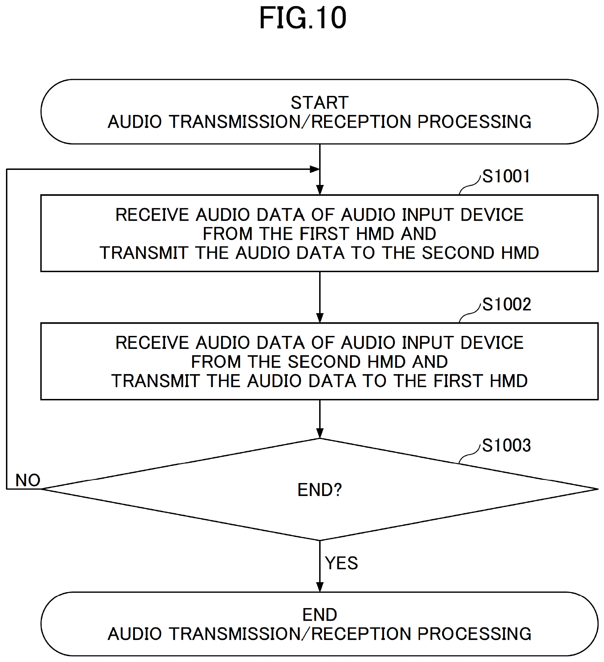

Next, a flow of audio transmission/reception processing performed by the information processing device 110 will be described. FIG. 10 is a flowchart illustrating the flow of audio transmission/reception processing performed by the information processing device.

In Step S1001, the information processing device 110 receives the voice of the first user 120 acquired by the audio input device 123 from the first HMD 121 and transmits the received voice to the second HMD 131, thereby causing the voice of the first user 120 to be output from the audio output device 132.

In Step S1002, the information processing device 110 receives the voice of the second user 130 acquired by the audio input device 133 from the second HMD 131 and transmits the received voice to the first HMD 121, thereby causing the voice of the second user 130 to be output from the audio output device 122.

Note that Step S1001 and Step S1002 may be executed in reverse order. Alternatively, Step S1001 and Step S1002 may be executed in parallel.

In Step S1003, the information processing device 110 determines whether or not to end the audio transmission/reception processing. In Step S1003, in a case where it is determined that the audio transmission/reception processing is to be continued (NO in Step S1003), the processing returns to Step S1001. On the other hand, in Step S1003, in a case where it is determined that the audio transmission/reception processing is to be ended (YES in Step S1003), the audio transmission/reception processing is ended.

### <Communication Scene in Which Display System According to

### First Embodiment Is Used>

Next, a scene will be described in which the first user 120 and the second user 130 communicate with each other while viewing the same three-dimensional model within a virtual space by using the display system 100 according to the first embodiment.

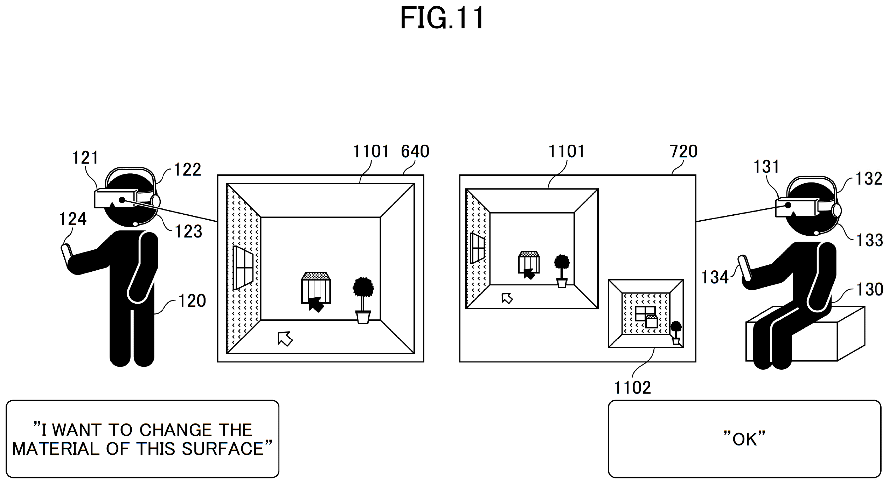

FIG. 11 is a first view illustrating an example of a communication scene in which the display system according to the first embodiment is used. FIG. 11 illustrates an example of a communication scene in a case where the operation authority is set to the first user 120. As illustrated in FIG. 11, in a case of the display system 100, the authorized-user display screen 640 including an authorized-user image 1101 is displayed on the display device 435 included in the first HMD 121. Moreover, in a case of the display system 100, the non-authorized-user display screen 720 including the authorized-user image 1101 and a non-authorized-user image 1102 is displayed on the display device 445 included in the second HMD 131. Note that, on the display device 445 included in the second HMD 131, the non-authorized-user display screen 720 may exclude the non-authorized-user image 1102, depending on the selection by the non-authorized user or on a default setting.

Under such a displaying state, suppose that the first user 120 says, for example, "I want to change the material of this surface." In this case, by viewing the authorized-user image 1101 included in the non-authorized-user display screen 720, the second user 130 is able to identify that the surface of which the first user 120 wishes to change the material is the surface pointed to by the pointer of the first user 120. This enables smooth communication between the first user 120 and the second user 130.

Although not illustrated in FIG. 11, suppose that the second user 130 moves the pointer of the second user 130 while viewing the authorized-user image 1101 included in the non-authorized-user display screen 720, and points to a surface different from the surface pointed to by the pointer of the first user 120.

Under such a displaying state, suppose that the second user 130 says, for example, "I want to change the material of this surface." In this case, by viewing the authorized-user image 1101 included in the authorized-user display screen 640, the first user 120 is able to identify that the surface of which the second user 130 wishes to change the material is the surface pointed to by the pointer of the second user 130. This enables smooth communication between the first user 120 and the second user 130.

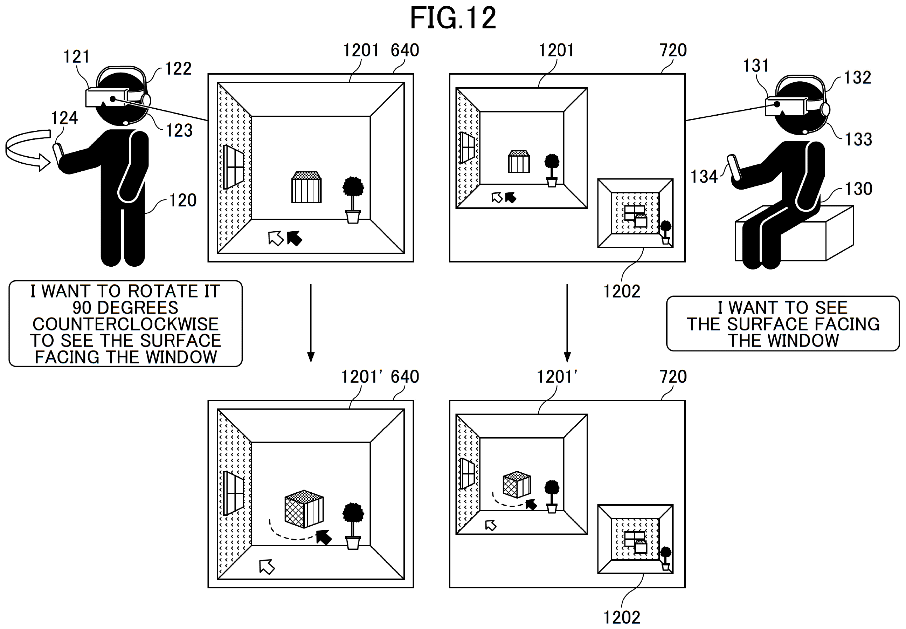

FIG. 12 is a second view illustrating an example of a communication scene in which the display system according to the first embodiment is used. FIG. 12 illustrates an example of a communication scene in a case where the operation authority is set to the first user 120. As illustrated in FIG. 12, in the case of the display system 100, the operation authority is set to only one user, and a plurality of users do not have the operation authority simultaneously.

Thus, for example, even in a case where the first user 120 and the second user 130 attempt to view the surface of the three-dimensional model facing the window within the virtual space, only the first user 120 can cause the three-dimensional model to be operated. That is, in a case of the display system 100 according to the first embodiment, it is possible to avoid a situation where different operation instructions are issued simultaneously.

The first user 120 moves the controller 124 so as to draw a counterclockwise arc, thereby rotating the three-dimensional model counterclockwise by 90 degrees. This enables the first user 120 to view a desired surface of the three-dimensional model within the virtual space by viewing an authorized-user image 1201 included in the authorized-user display screen 640. Moreover, the second user 130 can view a desired surface of the three-dimensional model within the virtual space by viewing the authorized-user image 1201 included in the non-authorized-user display screen 720.

### <Summary>

As is clear from the above description, the information processing device 110 according to the first embodiment:
- sets the operation authority for operating the three-dimensional model within the virtual space to either the first user 120 or the second user 130;
- in a case where the operation authority is set to the first user 120, generates the authorized-user image in which the three-dimensional model within the virtual space based on the viewpoint of the first user 120 is operated based on the operation instruction from the first user 120, and generates an authorized-user display screen including the authorized user image;
- generates the non-authorized-user display screen including the authorized-user image and the non-authorized-user image showing the virtual space based on the viewpoint of the second user 130 to whom the operation authority is not set; and
- controls to display the authorized-user display screen on the first HMD 121 worn by the first user 120 and the non-authorized-user display screen on the second HMD 131 worn by the second user 130.

As described above, in the information processing device 110 according to the first embodiment, the operation authority is set to any one of the users, and the authorized-user image is shared by a plurality of users. According to the first embodiment, this enables smooth communication among the plurality of users while the users are viewing the same three-dimensional model within the virtual space.

### [Second Embodiment]

In the first embodiment, a communication scene has been described in which the first user 120 wears the first HMD 121, and the second user 130 wears the second HMD 131. In contrast, in a second embodiment, a communication scene will be described in which a first user 120 wears a first HMD, and a second user 130 does not wear a second HMD 131 and views a display device. Note that the following description will mainly focus on differences from the first embodiment, and in the second embodiment, the operation authority is set only to the first user 120.

### <System Configuration of Display System>

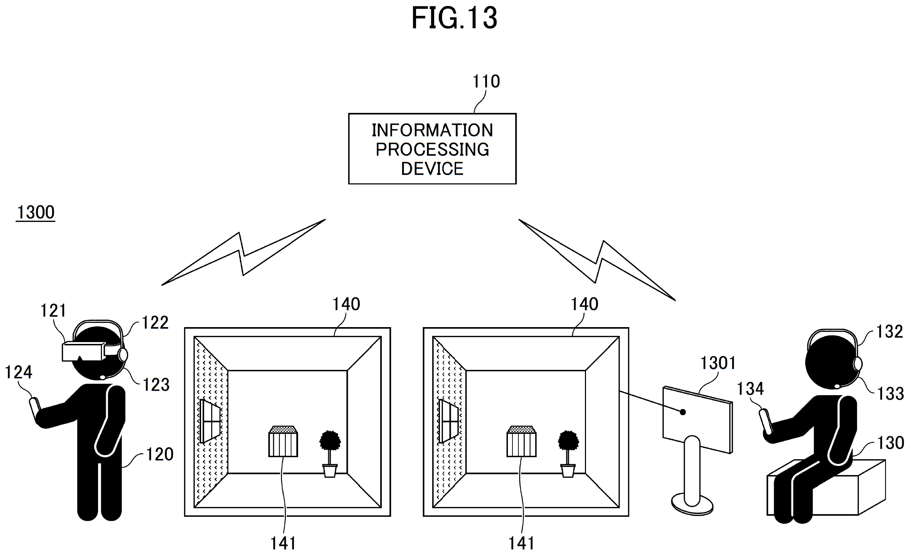

First, a system configuration of a display system according to the second embodiment will be described. FIG. 13 is a view illustrating an example of the system configuration of the display system according to the second embodiment. As illustrated in FIG. 13, a display system 1300 includes:
- an information processing device 110;
- a first HMD 121, an audio output device 122, an audio input device 123, and a controller 124; and
- an information terminal 1301, an audio output device 132, an audio input device 133, and a controller 134.

In the display system 1300, the information processing device 110 and an information terminal 1301 are communicably connected. According to the display system 1300, the first user 120 and the second user 130 can communicate with each other while viewing a three-dimensional model within a virtual space.

The information processing device 110 communicates with the information terminal 1301 and then receives a position-specifying instruction for specifying a position within a virtual-space image 140.

The information processing device 110 transmits, to the information terminal 1301, a non-authorized-user display screen including an authorized-user image generated based on the virtual-space image 140.

The information processing device 110 communicates with the first HMD 121 and the information terminal 1301 and then transmits and receives audio data so that a voice of the first user 120, which is acquired by the audio input device 123, is output from the audio output device 132. The information processing device 110 communicates with the first HMD 121 and the information terminal 1301 and then transmits and receives audio data so that a voice of the second user 130, which is acquired by the audio input device 133, is output from the audio output device 122.

The information terminal 1301 includes a display device viewed by the second user 130. The information terminal 1301 displays, on the display device, the non-authorized-user display screen transmitted from the information processing device 110.

The information terminal 1301 communicates with the audio input device 133 and the audio output device 132. The information terminal 1301 acquires audio data from the audio input device 133 and transmits the audio data to the information processing device 110. The information terminal 1301 also receives audio data from the information processing device 110 and notifies the audio output device 132.

The information terminal 1301 communicates with the controller 134. The information terminal 1301 acquires a position-specifying instruction from the controller 134 and transmits the position-specifying instruction to the information processing device 110.

The audio output device 132 outputs the audio data notified from the information terminal 1301. The audio input device 133 acquires a voice of the second user 130 and notifies the information terminal 1301. The controller 134 includes various sensors such as an acceleration sensor, a gyro sensor, and a geomagnetic sensor, and acquires the position-specifying instruction from the second user 130 by measuring various sensor data, including a position, an orientation, and a moving direction of a hand of the second user 130. The controller 134 notifies the information terminal 1301 of the acquired position-specifying instruction.

### <Hardware Configuration of Information Processing Device>

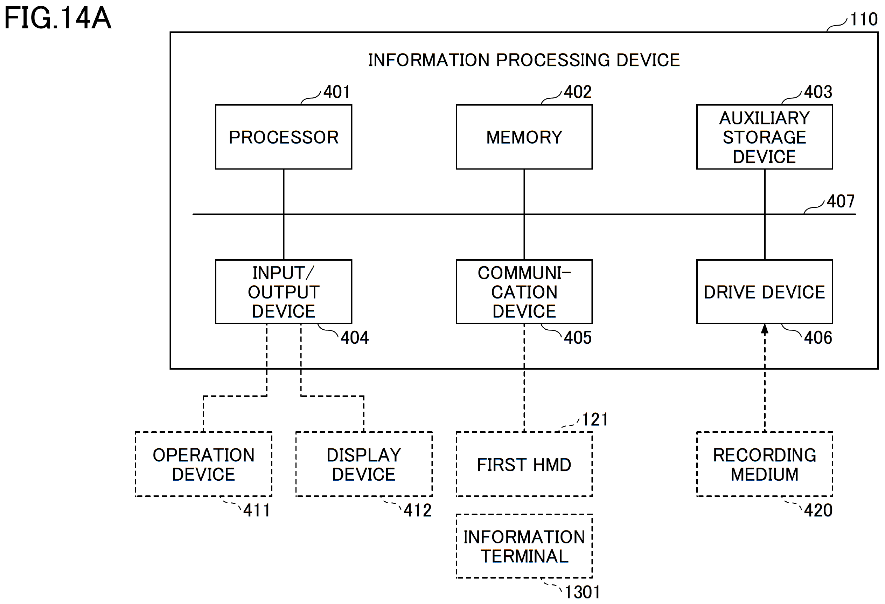

Next, a hardware configuration of the information processing device 110 will be described. FIG. 14A is a second diagram illustrating an example of the hardware configuration of the information processing device. The difference from the hardware configuration of the information processing device 110 illustrated in FIG. 4A is that, in the hardware configuration illustrated in FIG. 14A, the communication device 405 communicates with the first HMD 121 and the information terminal 1301.

### <Hardware Configuration of information terminal

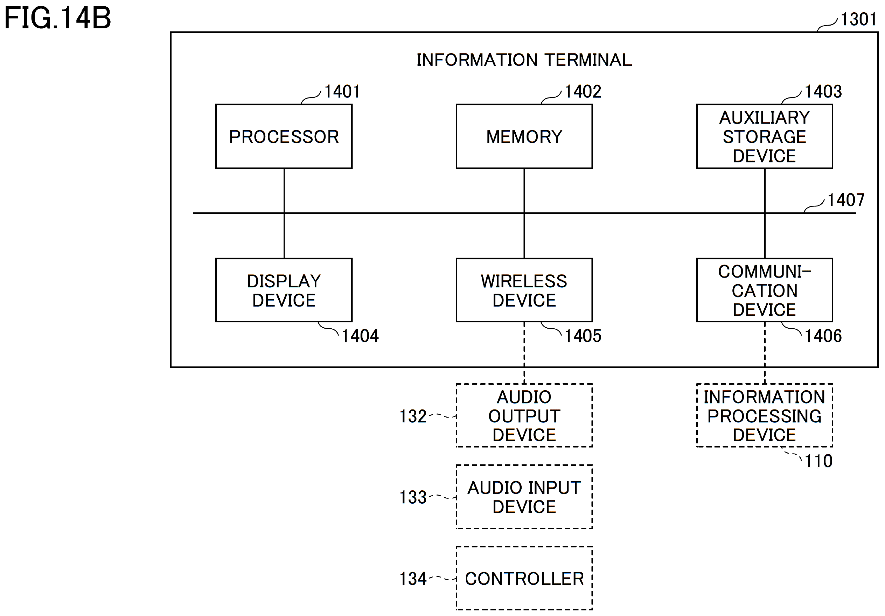

Next, a hardware configuration of the information terminal 1301 will be described. FIG. 14B is a diagram illustrating an example of the hardware configuration of the information terminal. As illustrated in FIG. 14B, the information terminal 1301 includes a processor 1401, a memory 1402, an auxiliary storage device 1403, a display device 1404, a wireless device 1405, and a communication device 1406. The hardware components of the information terminal 1301 are connected to each other via a bus 1407.

Note that the hardware components of the information terminal 1301 are substantially the same as the hardware components of the second HMD 131, and thus descriptions thereof are omitted herein.

### <Functional Configuration of Information Processing Device>

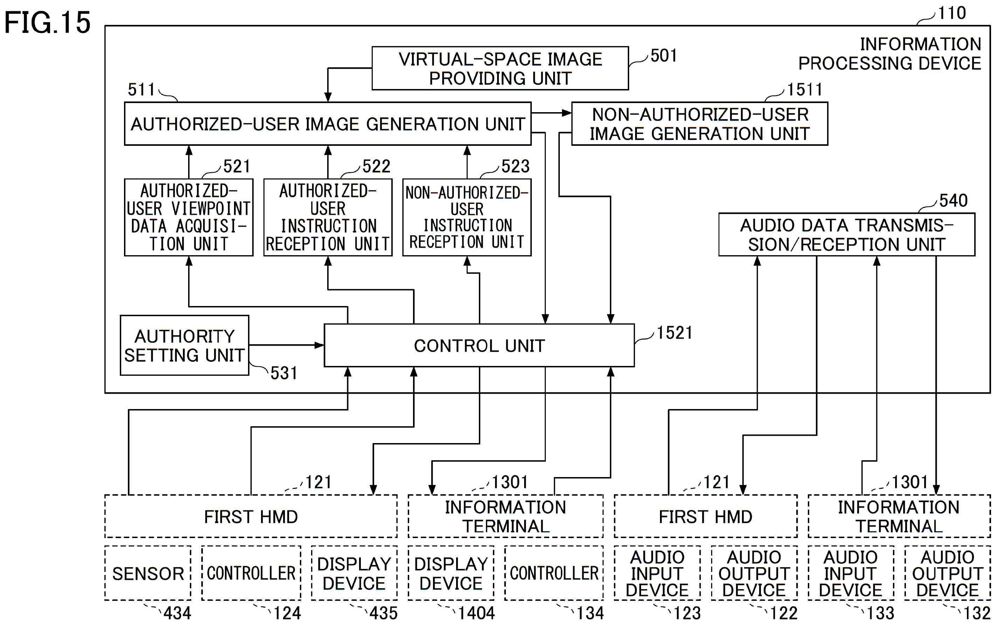

Next, a functional configuration of the information processing device 110 will be described. FIG. 15 is a second diagram illustrating an example of the functional configuration of the information processing device. The differences from the functional configuration illustrated in FIG. 5 are that a function of a non-authorized-user image generation unit 1511 is different from the function of the non-authorized-user image generation unit 512 in FIG. 5, and a function of a control unit 1521 is different from the function of the control unit 532 in FIG. 5.

The non-authorized-user image generation unit 1511 acquires an authorized-user image from an authorized-user image generation unit 511. The non-authorized-user image generation unit 1511 generates a non-authorized-user display screen including the acquired authorized-user image and notifies the control unit 1521.

The control unit 1521 notifies or transmits, to destinations for notification or transmission, viewpoint data, an authorized-user display screen or a non-authorized-user display screen, and an operation instruction or a position-specifying instruction transmitted and received between the first HMD 121 and the information terminal 1301.

### <Details of Processing By Functional Units of Information Processing Device>

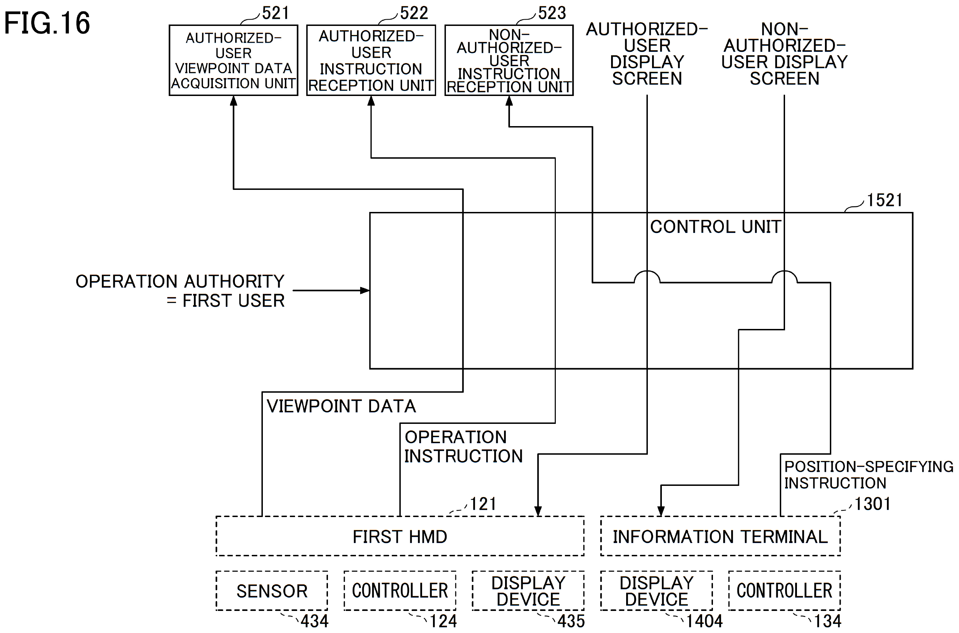

Next, details of processing performed by the control unit 1521 of the information processing device 110 will be described. FIG. 16 is a third diagram illustrating a specific example of processing performed by the control unit.

In the display system 1300 according to the second embodiment, the control unit 1521:
- notifies the authorized-user viewpoint data acquisition unit 521 of the viewpoint data transmitted from the first HMD 121;
- notifies the authorized-user instruction reception unit 522 of the operation instruction or the position-specifying instruction transmitted from the first HMD 121;
- notifies the non-authorized-user instruction reception unit 523 of the position-specifying instruction transmitted from the information terminal 1301;
- transmits the authorized-user display screen generated by the authorized-user image generation unit 511 to the first HMD 121; and
- transmits the non-authorized-user display screen generated by the non-authorized-user image generation unit 512 to the information terminal 1301.

### <Flow of Virtual-Space Display Processing by Information Processing Device>

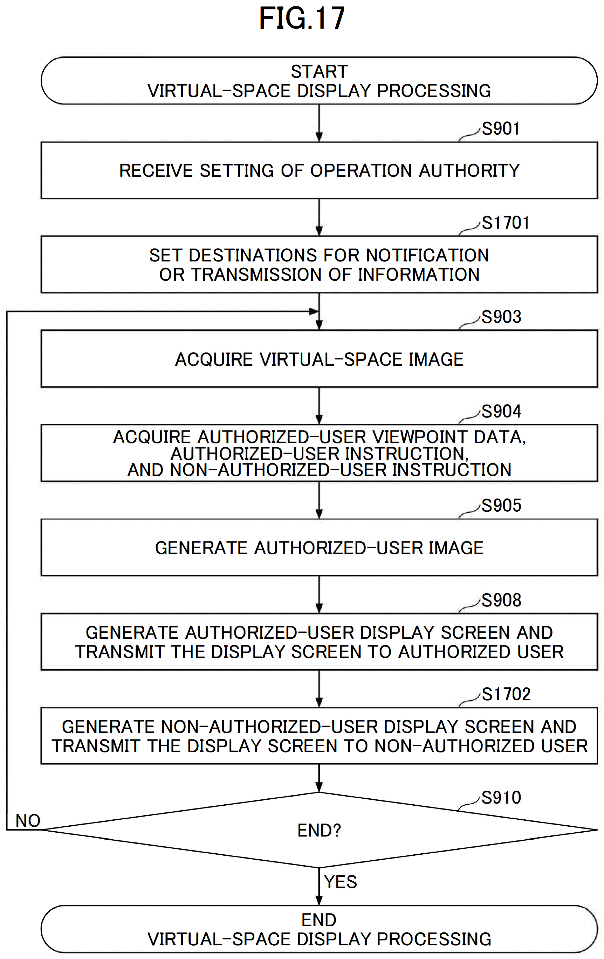

Next, a flow of virtual-space display processing performed by the information processing device 110 according to the second embodiment will be described. FIG. 17 is a second flowchart illustrating the flow of virtual-space display processing performed by the information processing device. The differences from the first flowchart illustrated in FIG. 9 are Steps S1701 and S1702.

In Step S1701, the information processing device 110 sets destinations for notification or transmission of the viewpoint data, the authorized-user display screen or the non-authorized-user display screen, and the operation instruction or the position-specifying instruction, transmitted and received between the first HMD 121 and the information terminal 1301.

In Step S1702, the information processing device 110 generates the non-authorized-user display screen including the authorized-user image and transmits the non-authorized-user display screen to the information terminal 1301.

### <Communication Scene in Which Display System According to Second Embodiment Is Used>

Next, a scene will be described in which the first user 120 and the second user 130 communicate with each other while viewing the same three-dimensional model within a virtual space by using the display system 1300 according to the second embodiment.

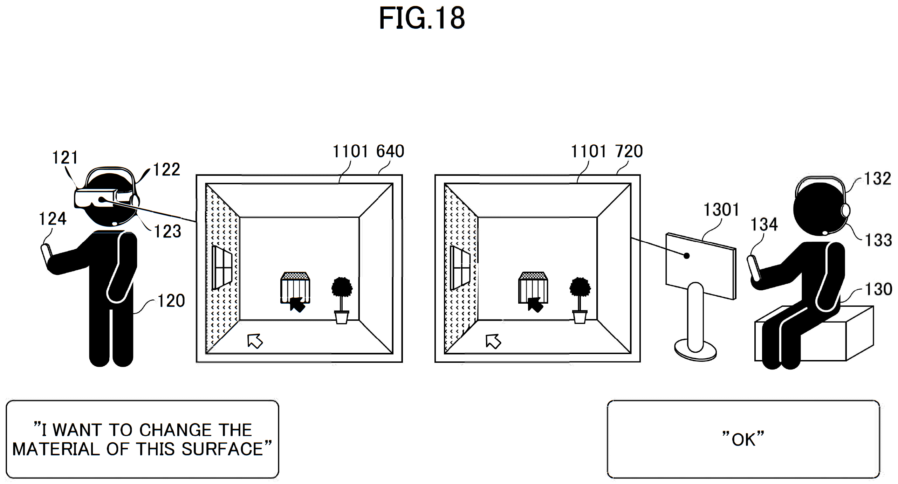

FIG. 18 is a first view illustrating an example of a communication scene in which the display system according to the second embodiment is used. As illustrated in FIG. 18, in a case of the display system 1300, an authorized-user display screen 640 including an authorized-user image 1101 is displayed on a display device 435 included in the first HMD 121. Moreover, in a case of the display system 1300, a non-authorized-user display screen 720 including the authorized-user image 1101 is displayed on the display device 1404 included in the information terminal 1301.

Under such a displaying state, suppose that the first user 120 says, for example, "I want to change the material of this surface." In this case, by viewing the authorized-user image 1101 included in the non-authorized-user display screen 720, the second user 130 is able to identify that the surface of which the first user 120 wishes to change the material is the surface pointed to by the pointer of the first user 120. This enables smooth communication between the first user 120 and the second user 130.

Although not illustrated in FIG. 18, suppose that the second user 130 moves the pointer of the second user 130 while viewing the authorized-user image 1101 included in the non-authorized-user display screen 720, and points to a surface different from the surface pointed to by the pointer of the first user 120.

Under such a displaying state, suppose that the second user 130 says, for example, "I want to change the material of this surface." In this case, by viewing the authorized-user image 1101 included in the authorized-user display screen 640, the first user 120 is able to identify that the surface of which the second user 130 wishes to change the material is the surface pointed to by the pointer of the second user 130. This enables smooth communication between the first user 120 and the second user 130.

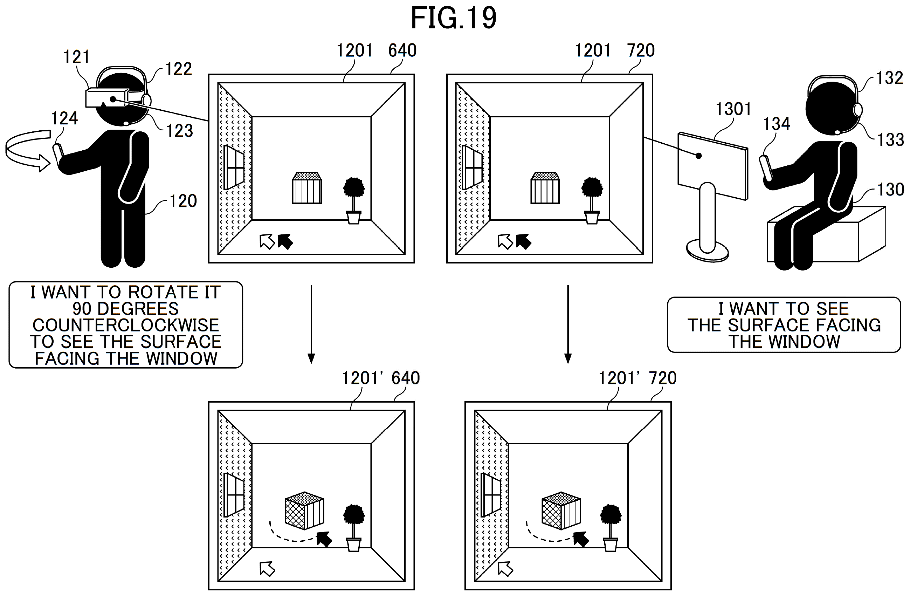

FIG. 19 is a second view illustrating an example of a communication scene in which the display system according to the second embodiment is used. As illustrated in FIG. 19, in a case of the display system 1300, the operation authority is set to only the first user 120, and a plurality of users do not have the operation authority simultaneously.

Thus, for example, even in a case where the first user 120 and the second user 130 attempt to view the surface of the three-dimensional model facing the window within the virtual space, only the first user 120 can cause the three-dimensional model to be operated. That is, in a case of the display system 1300 according to the second embodiment, it is possible to avoid a situation where different operation instructions are issued simultaneously.

The first user 120 moves the controller 124 so as to draw a counterclockwise arc, thereby rotating the three-dimensional model counterclockwise by 90 degrees. This enables the first user 120 to view a desired surface of the three-dimensional model within the virtual space by viewing an authorized-user image 1201 included in the authorized-user display screen 640. Moreover, the second user 130 can view a desired surface of the three-dimensional model within the virtual space by viewing the authorized-user image 1201 included in the non-authorized-user display screen 720.

### <Summary>

As is clear from the above description, the information processing device 110 according to the second embodiment:
- sets the operation authority for operating the three-dimensional model within the virtual space to the first user 120;
- generates the authorized-user image in which the three-dimensional model within the virtual space based on the viewpoint of the first user 120 is operated based on the operation instruction from first user 120, and generates the authorized-user display screen including the authorized-user image;
- generates the non-authorized-user display screen including the authorized-user image; and
- controls to display the authorized-user display screen on the first HMD 121 worn by the first user and the non-authorized-user display screen on the information terminal 1301 viewed by the second user.

As described above, in the information processing device 110 according to the second embodiment, the operation authority is set to the user wearing the HMD, and the authorized-user image is shared by a plurality of users. According to the second embodiment, this enables smooth communication among the plurality of users while the users are viewing the same three-dimensional model within the virtual space.

### [Third Embodiment]

In the above first embodiment, the display system 100 has been described as having two sets of combinations each including an HMD, an audio output device, an audio input device, and a controller. However, the number of such combinations included in the display system 100 is not limited to two. For example, the display system 100 may have three or more such combinations and may be applied to a communication scene involving three or more users.

Similarly, in the above second embodiment, the display system 1300 has been described as having one combination including an HMD, an audio output device, an audio input device, and a controller, and one combination of an information terminal, an audio output device, an audio input device, and a controller. However, the number of such combinations included in the display system 1300 is not limited to one for each. For example, the display system 1300 may include one combination of an HMD, an audio output device, an audio input device, and a controller, and a plurality of combinations of an information terminal, an audio output device, an audio input device, and a controller.

Alternatively, in the above first embodiment, in a case where the display system 100 has three or more such combinations, one or more of the combinations may be replaced with a combination of an information terminal, an audio output device, an audio input device, and a controller.

### [Other Embodiments]

In the above embodiments, the virtual-space image provided by the virtual-space image providing unit 501 has been described as an image simulating the real space. However, the virtual-space image provided by the virtual-space image providing unit 501 is not limited thereto. For example, in a case where a plurality of users perform analysis of a material at the molecular level, an image representing the material at the molecular level may be provided.

In the above first embodiment, it has been described that the user to whom the operation authority is set can switch between an operation instruction and a position-specifying instruction by operating a changeover switch of the controller. However, the functions of the information processing device 110 are not limited thereto. For example, when the operation instruction and the position-specifying instruction are switched, the information processing device 110 may be configured to change the display mode of the pointer in the authorized-user image.

In the above first embodiment, it has been described that, in the non-authorized-user display screen, the authorized-user image is displayed in the main region, and the non-authorized-user image is displayed in the subregion. However, in the non-authorized-user display screen, the authorized-user image may be displayed in the subregion, and the non-authorized-user image may be displayed in the main region. Alternatively, in the non-authorized-user display screen, the authorized-user image and the non-authorized-user image may be switched and displayed based on a switching instruction from a user to whom the operation authority is not set.

In the above embodiments, the HMD, the audio output device, and the audio input device have been described as being configured separately. However, the HMD, the audio output device, and the audio input device may be configured integrally.

In the above embodiments, the audio output device, the audio input device, and the controller are configured to transmit and receive information to and from the information processing device via the HMD or the information terminal. However, the audio output device, the audio input device, and the controller may be configured to transmit and receive information directly to and from the information processing device.

In the above second embodiment, it has been described that the second user 130 inputs a position-specifying instruction by using the controller 134. However, the second user 130 may input the position-specifying instruction by using a pointing device, such as a mouse, connected to the information terminal 1301.

In the above embodiments, the display method has been described as being applied to virtual reality in which a three-dimensional model is displayed in a virtual-space image. However, the application of the above display method is not limited to virtual reality, and the method may also be applied to augmented reality in which a virtual-space image including a three-dimensional model is displayed in a region where the real space is viewable.

Note that the present disclosure is not limited to the configurations described in the above embodiments, and various modifications, such as combinations with other elements, may also be adopted. These aspects may be modified without departing from the spirit of the present disclosure and may be appropriately defined in accordance with the applied form.

This application claims priority based on Japanese Patent Application No. 2023-185779 filed on October 30, 2023, the entire contents of which are incorporated herein by reference.

### [REFERENCE SIGNS LIST]

- 100:: Display system
- 110:: Information processing device
- 121:: First HMD
- 122:: Audio output device
- 123:: Audio input device
- 124:: Controller
- 131:: Second HMD
- 132:: Audio output device
- 133:: Audio input device
- 134:: Controller
- 435:: Display device
- 445:: Display device
- 501:: Virtual-space image providing unit
- 511:: Authorized-user image generation unit
- 512:: Non-authorized-user image generation unit
- 531:: Authority setting unit
- 532:: Control unit
- 540:: Audio data transmission/reception unit
- 611, 612:: Pointer
- 630:: Authorized-user image
- 640:: Authorized-user display screen
- 710:: Non-authorized-user image
- 720:: Non-authorized-user display screen
- 1300:: Display system
- 1301:: Information terminal
- 1511:: Non-authorized-user image generation unit
- 1521:: Control unit

## Claims

1. An information processing device, comprising:
an authority setting unit configured to set operation authority for operating a three-dimensional model within a virtual space to one of users;
an authorized-user image generation unit configured to, in a case where the operation authority is set to a first user, generate an authorized-user display screen including an authorized-user image in which the three-dimensional model within the virtual space based on a viewpoint of the first user is operated based on an operation instruction from the first user;
a non-authorized-user image generation unit configured to generate a non-authorized-user display screen including the authorized-user image and a non-authorized-user image showing the virtual space based on a viewpoint of a second user to whom the operation authority is not set; and
a control unit configured to control to display the authorized-user display screen on a first HMD worn by the first user and the non-authorized-user display screen on a second HMD worn by the second user.

2. The information processing device according to claim 1, wherein
the authorized-user image generation unit is configured to, in a case where the operation authority is set to the second user, generate an authorized-user image in which the three-dimensional model within the virtual space based on the viewpoint of the second user is operated based on an operation instruction from the second user,
the non-authorized-user image generation unit is configured to generate a non-authorized-user image showing the virtual space based on the viewpoint of the first user to whom the operation authority is not set, and
the control unit is configured to control to display the authorized-user display screen on the second HMD worn by the second user and the non-authorized-user display screen on the first HMD worn by the first user.

3. The information processing device according to claim 1 or 2, wherein
the control unit is configured to, in the case where the operation authority is set to the first user, control to notify the authorized-user image generation unit of viewpoint data received from the first HMD and the operation instruction from the first user, and
the authorized-user image generation unit is configured to generate the authorized-user image by generating an image of the virtual space based on the viewpoint of the first user based on the viewpoint data received from the first HMD and by generating an image in which the three-dimensional model within the virtual space based on the viewpoint of the first user is operated based on the operation instruction from the first user.

4. The information processing device according to claim 2, wherein
the control unit is configured to, in the case where the operation authority is set to the second user, control to notify the authorized-user image generation unit of viewpoint data received from the second HMD and the operation instruction from the second user, and
the authorized-user image generation unit is configured to generate the authorized-user image by generating an image of the virtual space based on the viewpoint of the second user based on the viewpoint data received from the second HMD and by generating an image in which the three-dimensional model within the virtual space based on the viewpoint of the second user is operated based on the operation instruction from the second user.

5. The information processing device according to claim 3, wherein
the control unit is configured to, in the case where the operation authority is set to the first user, control to notify the authorized-user image generation unit of a position-specifying instruction from the second user, and
the authorized-user image generation unit is configured to generate the authorized-user image including a pointer that points to a position within the virtual space based on the viewpoint of the first user based on the position-specifying instruction from the second user.

6. The information processing device according to claim 4, wherein
the control unit is configured to, in the case where the operation authority is set to the second user, control to notify the authorized-user image generation unit of a position-specifying instruction from the first user, and
the authorized-user image generation unit is configured to generate the authorized-user image including a pointer that points to a position within the virtual space based on the viewpoint of the second user based on the position-specifying instruction from the first user.

7. The information processing device according to any one of claims 1 to 6, further comprising:
a transmission/reception unit configured to transmit a voice of the first user to the second HMD and transmit a voice of the second user to the first HMD.

8. The information processing device according to any one of claims 1 to 7, wherein
the non-authorized-user image generation unit is configured to, in a case where the second user to whom the operation authority is not set does not wear the second HMD, generate a non-authorized-user display screen including the authorized-user image, and
the control unit is configured to control to display the authorized-user display screen on the first HMD worn by the first user and the non-authorized-user display screen on a display device viewed by the second user.

9. The information processing device according to claim 2, wherein
the non-authorized-user image generation unit is configured to, in a case where the first user to whom the operation authority is not set does not wear the first HMD, generate a non-authorized-user display screen including the authorized-user image, and
the control unit is configured to control to display the authorized-user display screen on the second HMD worn by the second user and the non-authorized-user display screen on a display device viewed by the first user.

10. A display system, comprising:
the information processing device of claim 1 or 2; and
the first HMD and the second HMD of claim 1 or 2.

11. A display system, comprising:
the information processing device of claim 8; and
the first HMD and the display device of claim 8.

12. A display system, comprising:
the information processing device of claim 9; and
the second HMD and the display device of claim 9.

13. A display method executed by a computer, the display method comprising the steps of:
setting operation authority for operating a three-dimensional model within a virtual space to one of users;
generating, in a case where the operation authority is set to a first user, an authorized-user display screen including an authorized-user image in which the three-dimensional model within the virtual space based on a viewpoint of the first user is operated based on an operation instruction from the first user;
generating a non-authorized-user display screen including the authorized-user image and a non-authorized-user image showing the virtual space based on a viewpoint of a second user to whom the operation authority is not set; and
controlling to display the authorized-user display screen on a first HMD worn by the first user and the non-authorized-user display screen on a second HMD worn by the second user.

14. A display program causing a computer to execute the steps of:
setting operation authority for operating a three-dimensional model within a virtual space to one of users;
generating, in a case where the operation authority is set to a first user, an authorized-user display screen including an authorized-user image in which the three-dimensional model within the virtual space based on a viewpoint of the first user is operated based on an operation instruction from the first user;
generating a non-authorized-user display screen including the authorized-user image and a non-authorized-user image showing the virtual space based on a viewpoint of a second user to whom the operation authority is not set; and
controlling to display the authorized-user display screen on a first HMD worn by the first user and the non-authorized-user display screen on a second HMD worn by the second user.
